(19) Europäisches Patentamt

European Patent Office

Office européen des brevets

(11) Veröffentlichungsnummer: **0 202 404**
**A1**

## (12) EUROPÄISCHE PATENTANMELDUNG

(21) Anmeldenummer: 86102955.1

(22) Anmeldetag: 06.03.86

(51) Int. Cl.4: **G10L 5/06**

(30) Priorität: 19.04.85 DE 3514286

(43) Veröffentlichungstag der Anmeldung:
26.11.86 Patentblatt 86/48

(84) Benannte Vertragsstaaten:
AT BE CH DE FR GB IT LI NL SE

(71) Anmelder: **Siemens Aktiengesellschaft Berlin
und München**
**Wittelsbacherplatz 2**
**D-8000 München 2(DE)**

(72) Erfinder: **Schlang, Martin**
**Bad Soden Strasse 10**
**D-8000 München 40(DE)**
Erfinder: **Küpper, Wolfgang, Dr.**
**Habsburgerplatz 4**
**D-8000 München 40(DE)**
Erfinder: **Kämmerer, Bernhard, Dipl.-Ing.**
**Unterhachinger Strasse 83a**
**D-8000 München 83(DE)**

(54) **System zur Erkennung einzeln gesprochener Wörter.**

(57) Ein System zur Erkennung einzeln gesprochener Wörter mit einer akusto-elektrischen Wandlerstufe ($W_E$), mit einem regelbaren Verstärker ($V_R$) und einem nachgeschalteten Hochpaßfilter (HP), wobei dieser Wandlerstufe ($W_E$) ein Signalayse-Pfad (S) und ein Pegelberechnungs-Pfad (P) nachgeschaltet sind. Zur Berechnung des Pegels des Ausgangssignals der Wandlerstufe ($W_E$) ist eine Schaltungsanordnung zur Erfassung der Hüllkurve dieses Signals in erster Näherung in dem Pegelberechnungs-Pfad (P) vorgesehen. Der Schaltungsanordnung zur Erfassung der Hüllkurve ist eine 1-bit-A/D-Wandlereinheit ($W_P$) nachgeschaltet, deren digitales 1-bit-Ausgangssignal einem Digitaleingang eines Mikroprozessors ($\mu P$) zugeführt wird. In dem Signalanalyse-Pfad (S) ist ein Tiefpaßfilter (TP) vorgesehen, dem eine 1-bit-A/D-Wandlereinheit ($W_S$) nachgeschaltet ist, welcher 1-bit-A/D-Wandlereinheit ($W_S$) eine digitale Verarbeitungseinheit ($V_V$) zur teilweisen Vorzeichenkorrelation des A/D-gewandelten Sprachsignals nachgeschaltet ist, deren Ausgangssignal in Form eines mehrere Bits breiten Datenwortes einem weiteren Digitaleingang des Mikroprozessors ($\mu P$) zugeführt wird.

FIG 1

System zur Erkennung einzeln gesprochener Wörter.

Die vorliegende Erfindung betrifft ein System zur Erkennung einzeln gesprochener Wörter, das für kleine Wortschatzgrößen bestimmt ist.

Seit längerem besteht der Wunsch, Anweisungen bzw. Befehle in ein System eingeben zu können, ohne daß dazu manuelle Vorgänge notwendig sind. Dazu sind bereits zahlreiche Spracherkennungssysteme in der Literatur beschrieben worden. Diese bekannten Spracherkennungssysteme weisen jedoch jeweils einen relativ großen Software-und Hardware-Aufwand zum Erkennen gesprochener Anweisungen bzw. Befehle auf.

Der vorliegenden Erfindung liegt die Aufgabe zugrunde, ein System zur Erkennung einzeln gesprochener Wörter zu schaffen, das für einen kleinen Wortschatz vorgesehen ist und das gegenüber bekannten Systemen kostengünstiger und platzsparender mit Standardbauteilen realisiert werden kann.

Die Aufgabe für die vorliegende Erfindung wird durch ein System zur Erkennung einzeln gesprochener Wörter gelöst, das durch die in dem Patentanspruch 1 angegebenen Merkmale gekennzeichnet ist.

Vorteilhafte Weiterbildungen der vorliegenden Erfindung sind durch die in den Unteransprüchen angegebenen Merkmale gekennzeichnet.

Die Erfindung wird im folgenden anhand mehrerer, Ausführungsbeispiele für die vorliegende Erfindung betreffender Figuren im einzelnen erläutert.

Fig.1 zeigt ein Blockschaltbild eines bevorzugten Ausführungsbeispiels für die vorliegende Erfindung, das die Gesamtanordnung des erfindungsgemäßen Systems darstellt.

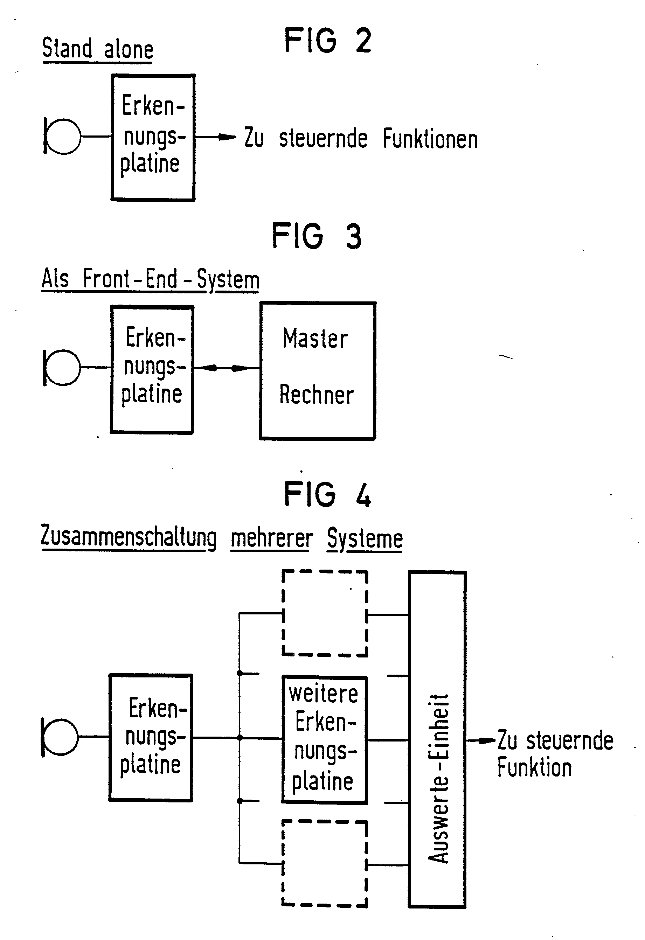

Fig.2 zeigt eine schematische, blockschaltbildähnliche Darstellung der Zusammenschaltung eines akusto-elektrischen Wandlers und einer Erkennungsplatine, die das gesamte erfindungsgemäße System enthält, mit einem Signalausgang, an dem Signale für zu steuernde Funktionen abnehmbar sind.

Fig.3 zeigt schematisch eine blockschaltbildähnliche Darstellung mit einem akusto-elektrischen Wandler, einer Erkennungsplatine, die das gesamte erfindungsgemäße System enthält, sowie einen an diese Erkennungsplatine an deren Signalausgang angeschalteten sogenannten Master-Rechner, welcher die Ausgangssignale der Erkennungsplatine für übergeordnete Aufgaben auswertet.

Fig.4 zeigt schließlich eine schematische, blockschaltbildähnliche Darstellung einer möglichen Zusammenschaltung mehrerer Systeme gemäß der vorliegenden Erfindung, wobei mehrere Anordnungen gemäß Fig.2 vielfach mit einer übergeordneten Erkennungsplatine mit erweitertem Wortschatz zusammengeschaltet sind. Bei diesem modularen Aufbau kann jede Erkennungsplatine einen Teilwortschatz bearbeiten. Dadurch kann das gesamte System den Anforderungen entsprechend stückweise ausgebaut werden.

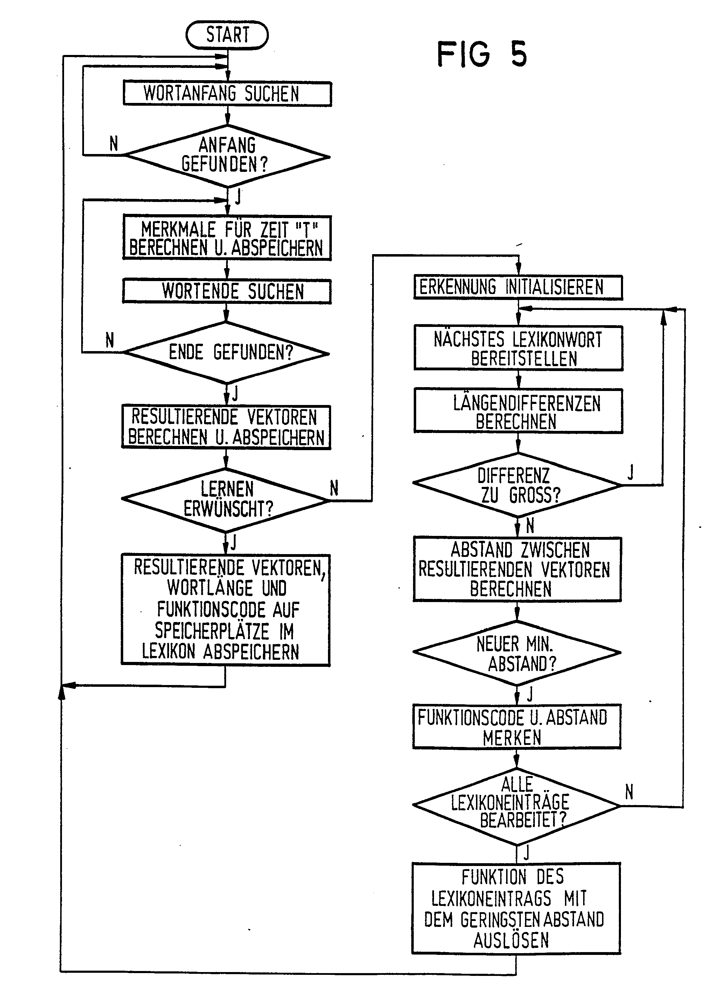

Fig.5 zeigt ein Flußdiagramm eines bevorzugten Ausführungsbeispiels für einen Verfahrensablauf gemäß der Erfindung.

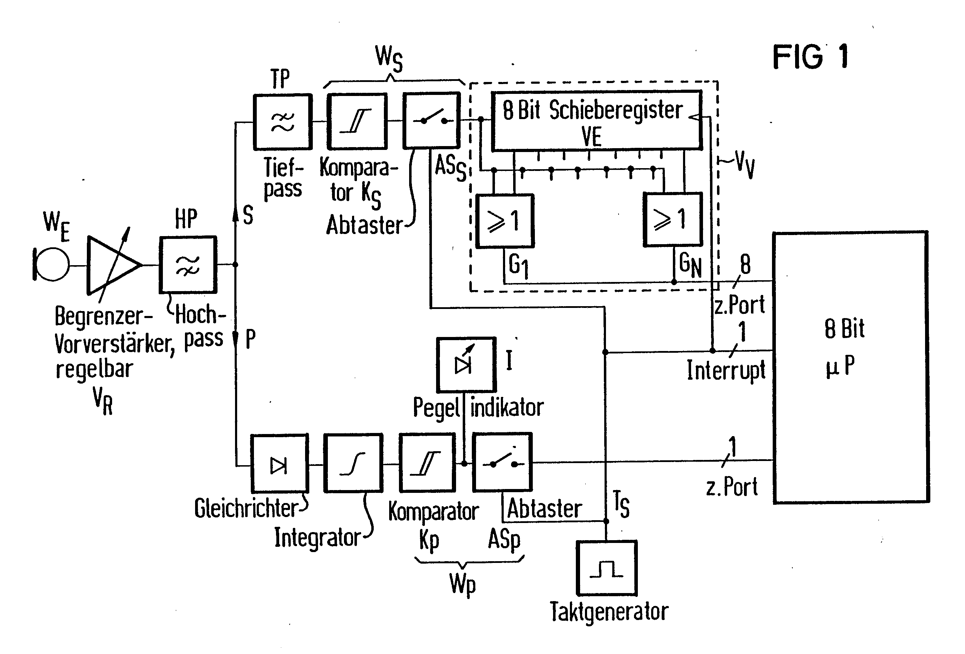

Das erfindungsgemäße System wird nun anhand von Fig.1 im einzelnen beschrieben.

Wie Fig.1 zeigt, ist eine akusto-elektrische Wandlerstufe $W_E$ mit einem regelbaren Verstärker $V_R$ und einem nachgeschalteten Hochpaßfilter HP zusammengeschaltet. Dieser Anordnung aus Wandlerstufe $W_E$, regelbarem Verstärker $V_R$ und Hochpaßfilter HP sind ein Signalanalyse-Pfad S und ein Pegelberechnungs-Pfad P nachgeschaltet. Zur Berechnung des Pegels des Ausgangssignals der Wandlerstufe $W_E$ in erster Näherung ist eine Schaltungsanordnung zur Erfassung der Hüllkurve dieses Signals in dem Pegelberechnungs-Pfad P vorgesehen. Dieser Schaltungsanordnung zur Erfassung der Hüllkurve ist eine 1-bit-A/D-Wandlereinheit $W_P$ nachgeschaltet, deren digitales 1-bit-Ausgangssignal einem Digitaleingang eines Mikroprozessors $\mu$P zugeführt wird. In dem Signalanalyse-Pfad S ist ein Tiefpaßfilter TP vorgesehen, dem eine 1-bit-A/D-Wandlereinheit $W_S$ nachgeschaltet ist, welcher 1-bit-A/D-Wandlereinheit $W_S$ eine digitale Verarbeitungseinheit $V_V$ zur teilweisen Vorzeichenkorrelation des A/D-gewandelten Sprachsignals nachgeschaltet ist, deren Ausgangssignal in Form eines mehrere Bits breiten Datenwortes einem weiteren Digitaleingang des Mikroprozessors $\mu$P zugeführt wird. In diesem angegebenen Systemaufbau erfolgt die Synchronisation der einzelnen Wandlereinheiten $W_P$, $W_S$ mit dem Mikroprozessor $\mu$P mittels eines übergeordneten Taktsignals.

Die 1-bit-A/D-Wandlereinheiten $W_P$, $W_S$ bestehen jeweils aus einem Komparator $K_P$ bzw. $K_S$ und einem nachgeschalteten Abtastschalter $AS_P$ bzw. $AS_S$. Vorzugsweise sind die Abtastschalter $AS_P$

bzw. AS $_S$ jeweils als getaktetes Flipflop realisiert. Die digitale Vorverarbeitungseinheit $V_V$ besteht aus einer getakteten digitalen Verzögerungseinheit VE mit mehreren Ausgängen sowie diesen Ausgängen individuell zugeordneten Verknüpfungsbausteinen. Vorzugsweise ist die digitale Verzögerungseinheit VE als Schieberegister realisiert, kann jedoch auch in anderer geeigneter Form ausgeführt sein.

Die Verknüpfungsbausteine, die den Ausgängen der Verzögerungseinheit individuell zugeordnet sind, sind vorzugsweise als Exklusiv-ODER-Glieder $G_1...G_N$ realisiert. Sie können jedoch auch als Äquivalenzglieder realisiert sein.

Vorzugsweise sind sämtliche digitalen Komponenten des Systems mittels einer gemeinsamen Logikeinheit, vorzugsweise eines PLA- (programmable logic array), realisiert.

Gemäß einer vorteilhaften Weiterbildung der vorliegenden Erfindung ist vorgesehen, daß die Funktion der digitalen Verarbeitungseinheit $V_V$ durch entsprechend erhöhte Rechenleistung des Mikroprozessors $\mu$P in diesen verlagert ist. Gemäß einer anderen Weiterbildung der Erfindung ist vorgesehen, daß ein Pegelindikator I vorgesehen ist, der eine Kontrolle der manuellen Einstellung des Verstärkungsfaktors des Verstärkers $V_R$ gestattet. Der Pegelindikator I ist vorzugsweise als lichtemittierende Diode LED realisiert, die nach dem Komparator $K_P$ in dem Pegelberechnungs-Pfad P angeordnet ist. Wenn dies für den betreffenden Anwendungsfall günstiger ist, kann der Pegelindikator gemäß einer anderen Weiterbildung der Erfindung auch als analoge Anzeigeeinheit realisiert sein, die vor der 1-bit-A/D-Wandlereinheit $W_P$ angeordnet ist. Die Einstellung des Verstärkers $V_R$ erfolgt automatisch in Abhängigkeit von dem jeweils bestehenden Umfeldgeräusch mittels einer Umfeldgeräusch-Erfassungeinrichtung (nicht dargestellt). Zur Einstellung des Verstärkers $V_R$ wird erfindungsgemäß eine Steuergröße mit Hilfe eines Tiefpaßfilters mit relativ großer Zeitkonstante aus dem Ausgangssignal des akusto-elektrischen Wandlers gewonnen (nicht gezeigt). Alternativ dazu ist gemäß einer Weiterbildung der Erfindung vorgesehen, daß zur Einstellung des Verstärkers $V_R$ eine Steuergröße mit Hilfe eines Tiefpaßfilters geringerer Zeitkonstante aus dem Ausgangssignal eines als Hilfswandler fungierenden zweiten akusto-elektrischen Wandlers gewonnen wird.

Im folgenden wird ein bevorzugtes Verfahren zum Betrieb des Systems der angegebenen Art beschrieben. In diesem erfindungsgemäßen Verfahren ist vorgesehen, daß zum Zwecke einer Merkmalsberechnung eine Vorzeichenkorrelation mit einem Vektor AKF, bestehend aus Vektorbestandteilen (AKF(n)) nach der Bedingung

$$AKF\ (n) \ = \ \sum_{t=0}^{T} s(t) \leftrightarrow s(t+n)$$

durchgeführt wird, wobei s(t) das Ausgangssignal der 1-bit-A/D-Wandlereinheit $W_S$ ist, t die Abtastzeitpunkte des Abtastschalters $AS_S$ bezeichnet, wobei t = 0, 1, 2, 3, ...T ist, T die Länge des zu betrachtenden Zeitintervalles ist und n = 1, 2, 3 ... N, N≤T, den Verschiebungsparameter der Korrelation darstellt.

Des weiteren sieht das Verfahren vor, daß das gesamte einzeln gesprochene Wort durch eine Folge von Vorzeichenkorrelations-Vektoren AKF dargestellt wird und daß diese Vektoren die Merkmale aufeinanderfolgender Zeitintervalle der Länge T innerhalb des Wortes sind.

Gemäß dem erfindungsgemäßen Verfahren ist außerdem vorgesehen, daß der Ausgang der 1-bit-A/D-Wandlerstufe $W_P$ zu den Zeitpunkten $t_P$ = m$^x$T berücksichtigt wird, wobei m = 0, 1, 2 ... ist und dieses Signal dann Pegelsignal genannt wird.

Der Beginn des einzeln gesprochenen Wortes wird dann zum Zeitpunkt $t_{PA}$ erkannt, wenn das Pegelsignal den logischen Pegel "1" hat und danach innerhalb der vorbestimmten Zeitspanne den logischen Pegel "1" häufiger als den logischen Pegel "0" annimmt. Das Ende eines einzeln gesprochenen Wortes ist der Zeitpunkt $t_{PE}$ des letzten Pegelsignals mit dem logischen Pegel "1", dem eine vorbestimmte Anzahl von Pegelsignalen mit dem logischen Pegel "0" folgt. Erfindungsgemäß wird die Länge eines einzeln gesprochenen Wortes aus der Differenz zwischen dem Ende und dem Beginn des Wortes L = $t_{PE}$ -$t_{PA}$bestimmt.

Das Verfahren sieht vor, daß das Wort in $N_B$ - ($N_B$) ungerade, Bereiche $B(1)$... $B(N_B)$ mit gleicher Anzahl von Merkmalsvektoren aufgeteilt wird, daß die Anzahl der Merkmalsvektoren innerhalb eines der Bereiche $B(1)$...$B(N_B)$ = $2/N_B + 1$ der Anzahl der Merkmalsvektoren L ist, daß der Beginn der Bereiche $B(1)$...$B(N_B)$ um die Werte

$$0 \times \frac{1}{N_B+1} \; , \quad 1 \times \frac{1}{N_B+1} \; , \quad 2 \times \frac{1}{N_B+1} \; \cdots \; N_B-1 \times \frac{1}{N_B+1}$$

vom Beginn des Wortes entfernt liegen und daß die Merkmalsvektoren innerhalb der Bereiche $B(1)$ ...$B(N_B)$ gemittelt werden und jeweils einen resultierenden Vektor $R1$...$RN_B$ liefern. Die Vektoren $R1$...$RN_B$ sowie die dazugehörige Länge L und eine als Kennung geeignete Codierung werden während der sogenannten Lernphase für jedes in der Erkennungsphase zu erkennende Wort in einem "Lexikon" abgespeichert. Während der Erkennungsphase werden in einem ersten Schritt diejenigen "Lexikon"-Wörter ausgeschieden, welche eine Länge aufweisen, die kleiner als ein Faktor F1 oder größer als ein Faktor F2 der Länge des zu erkennenden Wortes ist. Der Abstand des zu erkennenden Wortes zu den restlichen "Lexikon"-Wörtern wird durch Summation über die Betragsdifferenzen der jeweiligen Komponenten der Vektoren $R1$ ....$RN_B$ des zu erkennenden Wortes und der Vektoren $R1$...$RN_B$ des jeweiligen "Lexikon"-Wortes bestimmt. Als passend wird dasjenige "Lexikon"-Wort mit dem geringsten Abstand zu dem zu erkennenden Wort gewählt. Außerdem ist vorgesehen, daß eine Rückweisung erfolgt, falls dieser geringste Abstand größer als ein vorgegebener Wert ist, und daß die für das passende "Lexikon"-Wort als Kennung gewählte Codierung ausgegeben wird und eine vorbestimmte Aktion auslöst.

Eine Weiterbildung des erfindungsgemäßen Verfahrens sieht vor, daß für jedes zu erkennende Wort mehrere "Äußerungen" bearbeitet und abgespeichert werden, was bedeutet, daß gleiche Wörter beispielsweise von verschiedenen Personen gesprochen (nämlich "geäußert") werden. Für jedes zu erkennende Wort wird von mehreren Äußerungen" diejenige "Äußerung" abgespeichert, die den kleinsten Abstand zu allen anderen "Äußerungen" dieses Wortes hat.

Gemäß einer anderen Weiterbildung des erfindungsgemäßen Verfahrens ist vorgesehen, daß das "Lexikon"-Wort dann durch Berücksichtigung seiner Wortlänge und der Vektoren $R1$...$RN_B$ "nachgelernt" wird, falls der geringste Erkennungsabstand einen vorgegebenen Wert unterschreitet.

Schließlich ist vorgesehen, daß die verschiedenen "Äußerungen" eines Wortes von verschiedenen Sprechern erfaßt werden.

Das beschriebene System und as beschriebene Verfahren zum Betrieb des Systems ermöglichen eine kostengünstige, platzsparende Realisierung einer Einrichtung, mittels derer ein relativ kleiner Wortschatz hinsichtlich des Erkennens einzeln gesprochener Wörter aus diesem Wortschatz und des Auslösens damit ausgewählter Funktionen oder Aktionen bewältigt werden kann. Das erfindungsgemäße System ist in sofern insbesondere vorteilhaft, weil es ohne spezifische Bausteine, nämlich ausschließlich mit auf dem Markt erhältlichen Standardbausteinen, realisiert werden kann und eine einfache, zeitsparende Software benötigt.

Typische Anwendungsbeispiele für ein System gemäß der vorliegenden Erfindung sind beispielsweise die akustische Rufnummernwahl über einen Fernsprechapparat bzw. eine handapparatfreie Fernsprech-Endeinrichtung, Bedienungsbefehle für ein Kraftfahrzeug, für zu manipulierende medizinische Einrichtungen und so weiter.

STÜCKLISTE
(der verwendeten, auf dem Markt erhältlichen Schaltkreise)

Typ ... Hersteller

8085 ... Intel

LM 339 ... National Semiconductor

084 ... Texas Instruments

74 LS 86

74 LS 164

74 LS 109

2 K x 8 Bit ROM

2 K x 8 Bit RAM (C-MOS, batteriegepuffert

SAB 8251 ... Parallel-Port

**Ansprüche**

1. System zur Erkennung einzeln gesprochener Wörter, dadurch **gekennzeichnet,**

-daß eine akusto-elektrische Wandlerstufe ($W_E$) mit einem regelbaren Verstärker ($V_R$) und einem nachgeschalteten Hochpaßfilter (HP) vorgesehen ist,

-daß dieser Wandlerstufe ($W_E$) ein Signalanalyse-Pfad (S) und ein Pegelberechnungs-Pfad (P) nachgeschaltet sind,

-daß zur Berechnung des Pegels des Ausgangssignals der Wandlerstufe ($W_E$) in erster Näherung eine Schaltungsanordnung zur Erfassung der Hüllkurve dieses Signals in dem Pegelberechnungs-Pfad (P) vorgesehen ist,

- daß der Schaltungsanordnung zur Erfassung der Hüllkurve eine 1-bit-A/D-Wandlereinheit ($W_P$) nachgeschaltet ist, deren digitales 1-bit-Ausgangssignal einem Digitaleingang eines Mikroprozessors ($\mu P$) zugeführt wird,

-daß in dem Signalanalyse-Pfad (S) ein Tiefpaßfilter (TP) vorgesehen ist, dem eine 1-bit-A/D-Wandlereinheit ($W_S$) nachgeschaltet ist, welcher 1-bit-A/D-Wandlereinheit ($W_S$) eine digitale Verarbeitungseinheit ($V_V$) zur teilweisen Vorzeichenkorrelation des A/D-gewandelten Sprachsignals nachgeschaltet ist, deren Ausgangssignal in Form eines mehrere Bits breiten Datenwortes einem weiteren Digitaleingang des Mikroprozessors ($\mu P$) zugeführt wird, und

-daß die Synchronisation der einzelnen Wandlereinheiten ($W_P$, $W_S$) mit dem Mikroprozessor ($\mu P$) mittels eines übergeordneten Taktsignals (Ts) erfolgt.

2. System nach Anspruch 1, dadurch **gekennzeichnet,** daß die 1-bit-A/D-Wandlereinheiten ($W_P$, $W_S$) jeweils aus einem Komparator ($K_P$ bzw. $K_S$) und einem nachgeschalteten Abtastschalter ($AS_P$ bzw. $AS_S$) bestehen.

3. System nach Anspruch 2, dadurch **gekennzeichnet,** daß der Abtastschalter ($AS_P$ bzw. AS ) als getaktetes Flipflop realisiert ist.

4. System nach Anspruch 1, dadurch **gekennzeichnet**, daß die digitale Vorverarbeitungseinheit ($V_V$) aus einer getakteten digitalen Verzögerungseinheit (VE) mit mehreren Ausgängen sowie diesen Ausgängen individuell zugeordneten Verknüpfungsbausteinen besteht.

5. System nach Anspruch 4, dadurch **gekennzeichnet,** daß die digitale Verzögerungseinheit (VE) als Schieberegister realisiert ist.

6. System nach Anspruch 4, dadurch **gekennzeichnet,** daß die Verknüpfungsbausteine als Exklusiv-ODER-Glieder ($G_1...G_N$) realisiert sind.

7. System nach Anspruch 4, dadurch **gekennzeichnet,** daß die Verknüpfungsbausteine als Äquivalenzglieder realisiert sind.

8. System nach den Ansprüchen 2 bis 7, dadurch **gekennzeichnet,** daß die digitalen Komponenten des Systems mittels einer gemeinsamen Logikeinheit, vorzugsweise eines PLA(programmable logic array), realisiert sind.

9. System nach Anspruch 1, dadurch **gekennzeichnet,** daß die Funktion der digitalen Verarbeitungseinheit ($V_V$) durch entsprechend erhöhte Rechenleistung des Mikroprozessors ($\mu P$) in diesen verlagert ist.

10. System nach Anspruch 1, dadurch **gekennzeichnet,** daß ein Pegelindikator (I) vorgesehen ist, der eine Kontrolle durch manuelle Einstellung des Verstärkungsfaktors des Verstärkers ($V_R$) gestattet.

11. System nach Anspruch 10, dadurch **gekennzeichnet,** daß der Pegelindikator (I) als lichtemittierende Diode (LED) realisiert ist, die nach dem Komparator ($K_P$) in dem Pegelberechnungs-Pfad (P) angeordnet ist.

12. System nach Anspruch 10, dadurch **gekennzeichnet,** daß der Pegelindikator als analoge Anzeigeeinheit realisiert ist, die vor der 1-bit-A/D-Wandlereinheit ($W_P$) angeordnet ist.

13. System nach Anspruch 1, dadurch **gekennzeichnet**, daß die Einstellung des Verstärkers (V$_R$) automatisch in Abhängigkeit von dem jeweils bestehenden Umfeldgeräusch mittels einer Umfeldgeräusch-Erfassungseinrichtung erfolgt.

14. System nach Anspruch 13, dadurch **gekennzeichnet** , daß zur Einstellung des Verstärkers - (V$_R$) eine Steuergröße mit Hilfe eines Tiefpaßfilters mit relativ großer Zeitkonstante aus dem Ausgangssignal des akusto-elektrischen Wandlers gewonnen wird.

15. System nach Anspruch 13 und 14, dadurch **gekennzeichnet**, daß zur Einstellung des Verstärkers (V$_R$) eine Steuergröße mit Hife eines Tiefpaßfilters mit geringerer Zeitkonstante aus dem Ausgangssignal eines als. Hilfswandler fungierenden zweiten akusto-elektrischen Wandlers gewonnen wird.

16. Verfahren zum Betrieb des Systems nach einem der Ansprüche 1 bis 15, dadurch **gekennzeichnet**,

-daß zum Zwecke einer Merkmalsberechnung eine Vorzeichenkorrelation mit einem Vektor (AKF), bestehend aus Vektorbstandteilen (AKF(n)) nach der Bedingung

$$AKF(n) = \sum_{t=0}^{T} s(t) \leftrightarrow s(t+n)$$

durchgeführt wird, wobei s(t) das Ausgangssignal der 1-bit-A/D-Wandlereinheit (W$_s$ ) ist, t die Abtastzeitpunkte des Abtastschalters AS$_s$ bezeichnet, wobei t = 0,1,2,3 ...T ist, T die Länge des zu betrachtenden Zeitintervalles ist und n = 1, 2, 3 ... N, N $\leq$ T, den Verschiebungsparameter der Korrelation darstellt,

-daß das gesamte einzeln gesprochene Wort durch eine Folge von Vorzeichenkorrelations-Vektoren (AKF) dargestellt wird,

-daß diese Vektoren die Merkmale aufeinanderfolgender Zeitintervalle der Länge (T) innerhalb des Wortes sind,

-daß der Ausgang der 1-bit-A/D-Wandlerstufe (W$_p$) zu den Zeitpunkten tp = m$^x$T berücksichtigt wird, wobei m = 0,1,2 ... ist und dieses Signal dann Pegelsignal genannt wird,

-daß der Beginn des einzeln gesprochenen Wortes zum Zeitpunkt t$_{pA}$ dann erkannt wird, wenn das Pegelsignal den logischen Pegel "1" hat und danach innerhalb einer vorbestimmten Zeitspanne den logischen Pegel "1" häufiger als den logischen Pegel "0" annimmt,

-daß das Ende eines einzeln gesprochenen Wortes der Zeitpunkt t$_{PE}$ des letzten Pegelsignals mit dem logischen Pegel "1" ist, dem eine vorbestimmte Anzahl von Pegelsignalen mit dem logischen Pegel "0" folgt,

-daß die Länge eines einzeln gesprochenen Wortes die Differenz zwischen dem Ende und dem Beginn des Wortes L = t$_{PE}$-t $_{PA}$ist,

-daß das Wort in N$_B$(N$_B$ ungerade) Bereiche (B(1) ... B(N$_B$)) mit gleicher Anzahl von Merkmalsvektoren aufgeteilt wird,

-daß die Anzahl der Merkmalsvektoren innerhalb eines der Bereiche (B(1)...B(N$_B$ )) = 2/N$_B$ +1 der Anzahl der Merkmalsvektoren (L) ist,

-daß der Beginn der Bereiche (B(1)...B(N$_B$)) um die Werte

$$0 \times \frac{1}{N_B+1} \; , \; 1 \times \frac{1}{N_B+1} \; , \; 2 \times \frac{1}{N_B+1} \; \cdots \; (N_B-1) \, \frac{1}{N_B+1}$$

vom Beginn des Wortes entfernt liegen

-daß die Merkmalsvektoren innerhalb der Bereiche (B(1)... B($N_B$)) gemittelt werden und jeweils einen resultierenden Vektor (R1...RN$_B$) liefern,

-daß die Vektoren (R1...RN$_B$) sowie die dazugehörige Länge (L) und eine als Kennung geeignete Codierung während der Lernphase für jedes in der Erkennungsphase zu erkennende Wort in einem "Lexikon" abgespeichert werden,

-daß während der Erkennungsphase in einem ersten Schritt die "Lexikon"-Wörter ausgeschieden werden, welche eine Länge aufweisen, die kleiner als ein Faktor F1 oder größer als ein Faktor $F_2$ der Länge des zu erkennenden Wortes ist,

-daß der Abstand des zu erkennenden Wortes zu den restlichen "Lexikon"-Wörtern durch Summation über die Betragsdifferenzen der jeweiligen Komponenten der Vektoren (R1...RN$_B$) des zu erkennenden Wortes und der Vektoren (R1...RN$_B$) des jeweiligen "Lexikon"-Wortes bestimmt wird,

-daß das "Lexikon"-Wort mit dem geringsten Abstand zu dem zu erkennenden Wort als passend gewählt wird,

-daß eine Rückweisung erfolgt, falls dieser geringste Abstand größer als ein vorgegebener Wert ist und

-daß die für das passende "Lexikon"-Wort als Kennung gewählte Codierung ausgegeben wird und eine vorbestimmte Aktion auslöst.

17. Verfahren nach Anspruch 16, dadurch **gekennzeichnet**, daß für jedes zu erkennende Wort mehrere "Äußerungen" bearbeitet und abgespeichert werden.

18. Verfahren nach Anspruch 16, dadurch **gekennzeichnet**, daß für jedes zu erkennende Wort von mehreren "Äußerungen" diejenige "Äußerung" abgespeichert wird, welche den kleinsten Abstand zu den anderen "Äußerungen" dieses Wortes hat.

19. Verfahren nach Anspruch 16, dadurch **gekennzeichnet**, daß das "Lexikon"-Wort dann durch Mittelung seiner Wortlänge und der Vektoren - (R1...RN$_B$) "nachgelernt" wird, falls der geringste Erkennungsabstand einen vorgegebenen Wert unterschreitet.

20. Verfahren nach Anspruch 16, dadurch **gekennzeichnet**, daß die verschiedenen "Äußerungen" eines Wortes von verschiedenen Sprechern erfaßt werden.

21. Verfahren nach Anspruch 16, dadurch **gekennzeichnet**, daß die Anzahl N$_B$ der Bereiche auf 5 festgelegt ist.

22. Verfahren nach Anspruch 16, dadurch **gekennzeichnet**, daß zur Berechnung dser resultierenden Vektoren (R) die arithmetische Mittelung herangezogen wird.

FIG 1

8 Bit Schieberegister VE

$V_V$

$\geq 1$  $G_1$

$\geq 1$  $G_N$

$W_S$

TP

$\approx$

Tief-pass

Kompara-tor $K_S$

Abtaster

$AS_S$

$W_E$

HP

$\approx$

Begrenzer-Vorverstärker, regelbar $V_R$

Hoch-pass

S

P

Gleichrichter

Integrator

Komparator $K_p$

Abtaster

$AS_p$

$W_p$

Pegel indikator

I

$T_S$

Taktgenerator

8

z.Port

1

Interrupt

8 Bit $\mu P$

1

z.Port

0 202 404

## FIG 2

Stand alone

Erkennungsplatine → Zu steuernde Funktionen

## FIG 3

Als Front-End-System

Erkennungsplatine ↔ Master

Rechner

## FIG 4

Zusammenschaltung mehrerer Systeme

Erkennungsplatine

weitere
Erkennungsplatine

Auswerte-Einheit → Zu steuernde
Funktion

# FIG 5

```
                    START

              WORTANFANG SUCHEN

          N        ANFANG
        ←        GEFUNDEN?
                     │ J

            MERKMALE FÜR ZEIT "T"                   ERKENNUNG INITIALISIEREN
          BERECHNEN U. ABSPEICHERN

             WORTENDE SUCHEN                          NÄCHSTES LEXIKONWORT
                                                         BEREITSTELLEN
          N
        ←        ENDE GEFUNDEN?                      LÄNGENDIFFERENZEN
                                                        BERECHNEN
                     │ J

          RESULTIERENDE VEKTOREN                        DIFFERENZ          J
        BERECHNEN U. ABSPEICHERN                        ZU GROSS?      →

                                                         │ N
                LERNEN          N                   ABSTAND ZWISCHEN
              ERWÜNSCHT?      →                   RESULTIERENDEN VEKTOREN
                                                        BERECHNEN
                     │ J

          RESULTIERENDE VEKTOREN,                        NEUER MIN.
              WORTLÄNGE UND                                ABSTAND?
             FUNKTIONSCODE AUF
             SPEICHERPLÄTZE IM                            │ J
           LEXIKON ABSPEICHERN
                                                  FUNKTIONSCODE U. ABSTAND
                                                          MERKEN

                                                           ALLE          N
                                                     LEXIKONEINTRÄGE    →
                                                       BEARBEITET?

                                                           │ J

                                                      FUNKTION DES
                                                   LEXIKONEINTRAGS MIT
                                                  DEM GERINGSTEN ABSTAND
                                                        AUSLÖSEN
```

Europäisches
Patentamt

**EUROPÄISCHER RECHERCHENBERICHT**

Nummer der Anmeldung

EP 86 10 2955

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl 4) |
|---|---|---|---|
| X | IEEE TRANSACTIONS ON AUDIO AND ELECTROACOUSTICS, Band AU-16, Nr. 2, Juni 1968, Seiten 235-239, New York, US; R.F. PURTON: "Speech Recognition using autocorrelation analysis" * Abbildung 1; Zusammenfassung * | 1,4,5, 16,19 | G 10 L 5/06 |
| X | US-A-3 742 146 (E.A. NEWMAN et al.) * Abbildung 4 * | 1,4,5, 16 | |
| A | ICASSP81, IEEE INTERNATIONAL CONFERENCE ON ACOUSTICS, SPEECH AND SIGNAL PROCESSING, 30. März - 1. April 1981, Atlanta, US, Band 1, Seiten 188-192, IEEE, New York; H. NEY: "Telephone-line speaker recognition using clipped autocorrelation analysis" * Seiten 188,189: "The clipped autocorrelation function" * | 1 | |
| | | | RECHERCHIERTE SACHGEBIETE (Int. Cl.4) |
| | | | G 10 L 5/06 |
| A | PROCEEDINGS OF THE NATIONAL ELECTRONICS CONFERENCE, Band 35, Oktober 1981, Seiten 405-409, US; J.A. ELDON: "High resolution digital correlation" * Abbildung 1 * | 4-6 | |

--- -/-

Der vorliegende Recherchenbericht wurde für alle Patentansprüche erstellt.

| Recherchenort DEN HAAG | Abschlußdatum der Recherche 11-08-1986 | Prüfer ARMSPACH J.F.A.M. |
|---|---|---|

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl 4) |
|---|---|---|---|
| A | THE BELL SYSTEM TECHNICAL JOURNAL, Band 57, Nr. 5, Mai/Juni 1978, Seiten 1619-1626, American Telephone and Telegraph Company, New York, US; S.E. LEVINSON et al.: "Evaluation of a word recognition system using syntax analysis" * Seite 1621, Zeilen 9-12 * | 10-12 | |
| | --- | | |
| A | ICASSP79, 1979 IEEE INTERNATIONAL CONFERENCE ON ACOUSTICS, SPEECH & SIGNAL PROCESSING, 2. - 4. April 1979, Washington, US; , Seiten 220-223, IEEE, New York, US; D.P. FULGHUM et al.: "LPC voice digitizer with background noise suppression" * Abbildung 4 * | 13 | |
| | --- | | RECHERCHIERTE SACHGEBIETE (Int. Cl.4) |
| A | EP-A-0 093 303 (NISSAN MOTOR CO.) * Zusammenfassung; Abbildung 2 * | 13,14 | |
| | --- | | |
| A | CH-A- 243 742 (AUTOPHON AG) * Unteransprüche 2,4 * | 13,15 | |
| | --- -/- | | |

Der vorliegende Recherchenbericht wurde für alle Patentansprüche erstellt.

| Recherchenort DEN HAAG | Abschlußdatum der Recherche 11-08-1986 | Prüfer ARMSPACH J.F.A.M. |
|---|---|---|

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| A | ICASSP 83, IEEE INTERNATIONAL CONFERENCE ON ACOUSTICS, SPEECH AND SIGNAL PROCESSING, 14. - 16. April 1983, Boston, US, Band 2, Seiten 753-756, IEEE, New York, US; P.K. RAJASEKARAN et al.: "Microcomputer implementable low cost speaker-independent word recognition" * Abbildung 1 * | 16 | |
| A | IBM TECHNICAL DISCLOSURE BULLETIN, Band 25, Nr. 11A, April 1983, Seiten 5448-5452, IBM Corp, New York, US; N.R. DIXON et al.: "Efficient method for large vocabulary, discrete utterance recognition" * Abbildungen 1,2 * | 16 | |
| | | | RECHERCHIERTE SACHGEBIETE (Int. Cl.4) |
| A | US-A-3 582 559 (M.H. HITCHCOCK) * Abbildung 1; Patentanspruch 6 * | 16,22 | |
| A | COMPCON 79, 19th IEEE COMPUTER SOCIETY INTERNATIONAL CONFERENCE, 4. - 7. September 1979, Washington, US, Seiten 392-395, IEEE, New York, US; S. SUGAYA et al.: "Voice remote controlled TV set" * Abbildung 1; Seiten 393,394: "Waveform normalization section" * | 16 | |

--- -/-

Der vorliegende Recherchenbericht wurde für alle Patentansprüche erstellt.

| Recherchenort | Abschlußdatum der Recherche | Prüfer |
|---|---|---|
| DEN HAAG | 11-08-1986 | ARMSPACH J.F.A.M. |

## EINSCHLÄGIGE DOKUMENTE

Seite 4

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| A | IEEE TRANSACTIONS ON ACOUSTICS, SPEECH AND SIGNAL PROCESSING, Band ASSP-27, Nr. 6, Dezember 1979, Seiten 583-587, IEEE, New York, US; L.R. RABINER: "Speaker-independent isolated word recognition for a moderate size (54 word) vocabulary" * Seite 583, linke Spalte, Zeilen 22-25 * | 17 | |
| A | 1978 IEEE INTERNATIONAL CONFERENCE ON ACOUSTICS, SPEECH AND SIGNAL PROCESSING, 10. - 12. April 1978, Tulsa, US, Seiten 546-548, IEEE, New York, US; V.N. GUPTA et al.: "Speaker-independent vowel identification in continuous speech" * Zusammenfassung * | 17,20 | |
| A | US-A-4 181 821 (F.C. PIRZ et al.) * Patentanspruch 1 * | 17,18, 20 | |
| A | DE-A-2 945 377 (HAJIME INDUSTRIES) * Patentanspruch 1 * | 19 | |

RECHERCHIERTE SACHGEBIETE (Int. Cl.4)

Der vorliegende Recherchenbericht wurde für alle Patentansprüche erstellt.

| Recherchenort DEN HAAG | Abschlußdatum der Recherche 11-08-1986 | Prüfer ARMSPACH J.F.A.M. |
|---|---|---|

KATEGORIE DER GENANNTEN DOKUMENTE
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82